# EUROPEAN PATENT APPLICATION

(11) **EP 1 738 898 A1**
(43) Date of publication of application: **03.01.2007**
(21) Application number: 06115947.1
(22) Date of filing: 23.06.2006
(51) Int. Cl.: B32B 27/00, G03G 15/20, C08K 7/24

(54) **Coated members and process for making the same**

(30) Priority: 28.06.2005 US 167158
(71) Applicant: Xerox Corporation, Rochester, New York 14644 (US)
(72) Inventor: Hays, Dan A, Fairport, NY 14450 (US); Gervasi, David J, Penfield, NY 14526 (US)
(74) Representative: Skone James, Robert Edmund

(57) **Abstract**

A coated member (1) includes a substrate (4) and a coating layer (2) over the substrate where the coating layer includes carbon nanotubes dispersed in a polymeric binder. The member, which is suitable for use in an electrostatographic printing process, can be in the form of a fuser member, a fixing member, a pressure roller, or a release agent donor member.

## Description

This invention relates to coated members such as fuser or fixing members, and processes for making such members. This disclosure also relates to electrostatographic printing apparatuses using such fusing and fixing members.

In a typical electrostatographic printing apparatus, a light image of an original to be copied is recorded in the form of an electrostatic latent image upon a photosensitive member and the latent image is subsequently rendered visible by the application of electroscopic thermoplastic resin particles, which are commonly referred to as toner. The visible toner image is then in a loose powdered form and can be easily disturbed or destroyed. The toner image is usually fixed or fused upon a support, which may be a photosensitive member itself or other support sheet such as plain paper, transparency, specialty coated paper, or the like.

The use of thermal energy for fixing toner images onto a support member is well known. In order to fuse electroscopic toner material onto a support surface permanently by heat, it is necessary to elevate the temperature of the toner material to a point at which the constituents of the toner material coalesce and become tacky. This heating causes the toner to flow to some extent into the fibers or pores of the support member. Thereafter, as the toner material cools, solidification of the toner material causes the toner material to be firmly bonded to the support.

Typically, thermoplastic resin particles are fused to the substrate by heating to a temperature of between about 90°C to about 160°C or higher, depending upon the softening range of the particular resin used in the toner. It is not desirable, however, to raise the temperature of the substrate substantially higher than about 200°C because of the tendency of the substrate to discolor at such elevated temperatures particularly when the substrate is paper.

Several approaches to thermal fusing of electroscopic toner images have been described in the prior art. These methods include providing the application of heat and pressure substantially concurrently by various means, including a roll pair maintained in pressure contact, a belt member in pressure contact with a roll, and the like. Heat may be applied by heating one or both of the rolls, plate members or belt members. The fusing of the toner particles generally takes place when the proper combination of heat, pressure and contact time are provided. The balancing of these parameters to bring about the fusing of the toner particles is well known in the art, and they can be adjusted to suit particular machines, process conditions, and printing substrates.

During operation of a fusing system in which heat is applied to cause thermal fusing of the toner particles onto a support, both the toner image and the support are passed through a nip formed between the roll pair, or plate and/or belt members. The concurrent transfer of heat and the application of pressure in the nip effects the fusing of the toner image onto the support. It is important in the fusing process that no offset of the toner particles from the support to the fuser member takes place during normal operations. Toner particles offset onto the fuser member may subsequently transfer to other parts of the machine or onto the support in subsequent copying cycles, thus, increasing the background or interfering with the material being copied there. The so called "hot offset" occurs when the temperature of the toner is raised to a point where the toner particles liquefy and a splitting of the molten toner takes place during the fusing operation with a portion remaining on the fuser member.

The hot offset temperature or degradation of the hot offset temperature is a measure of the release property of the fuser roll, and accordingly it is desired to provide a fusing surface that has a low surface energy to provide the necessary release. To ensure and maintain good release properties of the fuser roll, it has become customary to apply release agents to the fuser members to ensure that the toner is completely released from the fuser roll during the fusing operation. Typically, these materials are applied as thin films of, for example, silicone oils to prevent toner offset. In addition to preventing hot offset, it is desirable to provide an operational latitude as large as possible. By operational latitude it is intended to mean the difference in temperature between the minimum temperature required to fix the toner to the paper, the minimum fix temperature, and the temperature at which the hot toner will offset to the fuser roll, the hot offset temperature.

Generally, fuser and fixing rolls are prepared by applying one or more layers to a suitable substrate. For example, cylindrical fuser and fixer rolls are typically prepared by applying an elastomer or a fluoroelastomer layer, with or without additional layers, to an aluminum core. The coated roll is then heated in a convection oven to cure the elastomer or fluoroelastomer material.

In use, important properties of the fuser or fixer members include thermal conductivity and mechanical properties such as hardness. Thermal conductivity is important because the fuser or fixer member must adequately conduct heat, to provide the heat to the toner particles for fusing. Mechanical properties of the fuser or fixer member are important because the member must retain its desired rigidity and elasticity, without being degraded in a short period of time. In order to increase the thermal conductivity of the fuser or fixer members, it has been conventional to add quantities of conductive particles as fillers, such as metal oxide fillers. In order to provide high thermal conductivity, the loading of the filler must be high. However, increasing the loading of the filler tends to adversely affect mechanical properties of the coating layer, making the member harder and more prone to wear. For example, conventional metal oxides include aluminum, iron, copper, tin, and zinc oxides. These metal oxide filler materials, at loadings up to about 60 wt%, provide thermal conductivities of from about 0.2 to about 1.0 Wm⁻¹K⁻¹. However, the loading amount of the filler must be limited due to the increased hardness provided by high loading levels.

Accordingly, there is a need in the art for improved filler materials for fuser and fixer members. Specifically, there is a need for improved filler materials that will provide higher thermal conductivity, but of a type or at loading levels that provide lower hardness to the member. There is also a need for improved filler materials that improve other mechanical properties of the member, such as longer life performance.

In accordance with a first aspect of the present invention, a coated member comprises:
a substrate; and
a coating layer over said substrate, and is characterized in that
said coating layer comprises carbon nanotubes dispersed in a polymeric binder.

In accordance with a second aspect of the present invention, a method of making a coated member comprises:
providing a substrate; and
coating the substrate with a coating layer comprising carbon nanotubes dispersed in a polymeric binder.

This disclosure addresses some or all of the above problems, and others, by providing fuser or fixer members that include carbon nanotubes or its variants, such as carbon nanofibers. Such inclusion enhances the thermal conductivity of the member even at lower loading amounts of filler, which in turn provides increased thermal conductivity, increased fixing latitude, lower hardness, increased life, and the like. Furthermore, a concomitant increase in electrical conductivity helps mitigate the possibility of image disturbance by charge accumulation on the surface of the outer fuser or fixing member layers.

Carbon nanotubes represent a new, distinct molecular form of carbon in which a single layer of atoms is rolled into a seamless tube that is on the order of 1 to 10 nanometers in diameter, and up to hundreds of micrometers or more in length. See Ouellette, J., The Industrial Physicist, American Institute of Physics, pp. 18-21, Dec. 2002/Jan. 2003. The carbon nanotubes have been discovered in both multi-walled and single-walled forms, and exhibit extraordinary electric, mechanical, and thermal conductivity properties. The carbon nanotubes can be either electrically conducting or semi-conducting, depending upon the chirality (twist) of the nanotubes. The carbon nanotubes have yield stresses much higher than that of steel, and can be kinked without permanent damage. The thermal conductivity of carbon nanotubes is much higher than that of copper, and comparable to that of diamond. Carbon nanotubes can be formed by a variety of known methods, including carbon arc discharge, pulsed laser vaporization, chemical vapor deposition, and high pressure CO.

Recent experiments report a significant increase in thermal conductivity of polymers when filled with relatively low volume fractions of carbon nanotubes. See Biercuk, M.J., et al., "Carbon Nanotube Composites for Thermal Management," Appl. Phys. Lett., Vol. 80, pp. 2767-2769(2002). For example, for only a 1% volume fraction of single-walled carbon nanotubes in epoxy, the thermal conductivity was about 0.5 Wm⁻¹K⁻¹, which was more than double the conductivity of the pure epoxy. This increase is attributed to the high thermal conductivity of nanotubes, which is believed to be 3000 Wm⁻¹K⁻¹ for multi-walled nanotubes and even higher for single-walled nanotubes. See Berber, S. et al., "Unusually High Thermal Conductivity of Carbon Nanotubes," Phys. Rev. Lett., Vol. 84, pp. 4613-4616 (2000) and Kim, P. et al., "Thermal Transport Measurements of Individual Multiwalled Nanotubes," Phys. Rev. Lett., Vol. 87, pp. 215502-1 to 215502-4 (2001). This model assumes no thermal resistance at the interface between nanotubes.

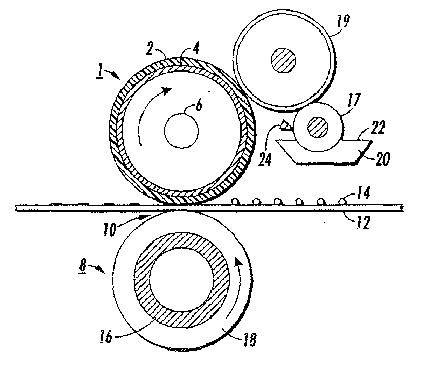

These and other advantages and features of this disclosure will be apparent from the following, especially when considered with the accompanying drawing, in which:
The FIGURE is a sectional view of a fuser system including an example of a fuser member according to the present invention.

In the embodiments, the various members are made according to any of the various known processes in the art, except that carbon nanotubes and/or its variants are incorporated into the member, in place of or in conjunction with conventional filler materials, to provide thermal conductivity and other properties.

A typical fuser member of an embodiment of the invention is described in conjunction with a fuser assembly as shown in the Figures where the numeral 1 designates a fuser roll comprising an outer surface 2 upon a suitable base member 4. The base member 4 can be a hollow cylinder or core fabricated from any suitable metal such as aluminum, anodized aluminum, steel, nickel, copper, and the like. Alternatively, the base member 4 can be a hollow cylinder or core fabricated from non-metallic materials, such as polymers or the like, or can be an endless belt (not shown) of similar construction. As shown in the Figure, the base member 4 has a suitable heating element 6 disposed in the hollow portion thereof and that is coextensive with the cylinder. Backup or pressure roll 8 cooperates with the fuser roll 1 to form a nip or contact arc 10 through which a copy paper or other substrate 12 passes, such that toner images 14 on the copy paper or other substrate 12 contact the outer surface 2 of fuser roll 1. As shown in the Figure, the backup roll 8 has a rigid steel core 16 with a soft surface layer 18 thereon, although the assembly is not limited thereto. Sump 20 contains a polymeric release agent 22 which may be a solid or liquid at room temperature, but is a fluid at operating temperatures.

In the embodiment shown in the Figure for applying the polymeric release agent 22 to outer surface 2, two release agent delivery rolls 17 and 19 rotatably mounted in the direction indicated are provided to transport release agent 22 from the sump 20 to the fuser roll surface. As illustrated, roll 17 is partly immersed in the sump 20 and transports on its surface release agent from the sump to the delivery roll 19. By using a metering blade 24, a layer of polymeric release fluid can be applied initially to delivery roll 19 and subsequently to the outer surface 2 of the fuser roll 1 in controlled thickness ranging from submicrometer thickness to thickness of several micrometers of release fluid. Thus, by metering device 24 about 0.1 to 2 micrometers or greater thickness of release fluid can be applied to the surface of fuser roll 1.

Of course, it will be appreciated that the design illustrated in the Figure is not limiting to the present disclosure. For example, other well known and after developed electrostatographic printing apparatuses can also accommodate and use the fuser and fixer members described herein. For example, some apparatus in embodiments does not require the application of release agent to the fuser roll surface, and thus the release agent components can be omitted. In other embodiments, the depicted cylindrical fuser roll can be replaced by an endless belt fuser member. In still other embodiments, the heating of the fuser member can be by methods other than a heating element disposed in the hollow portion thereof. For example, heating can be by an external heating element or an integral heating element, as desired. Other changes and modification will be apparent to those in the art.

As used herein, the term "fuser" or "fixing" member, and variants thereof, may be a roll, belt such as an endless belt, flat surface such as a sheet or plate, or other suitable shape used in the fixing of thermoplastic toner images to a suitable substrate. It may take the form of a fuser member, a pressure member or a release agent donor member preferably in the form of a cylindrical roll. Typically, the fuser member is made of a hollow cylindrical metal core, such as copper, aluminum, steel and the like, and has an outer layer of the selected elastomer or fluoroelastomer. Alternatively, there may be one or more intermediate layers between the substrate and the outer layer of the elastomer, if desired. Typical materials having the appropriate thermal and mechanical properties for such layers include silicone elastomers, fluoroelastomers, EPDM (ethylene propylene hexadiene), and Teflon™ (i.e., polytetrafluoroethylene) such as Teflon PFA sleeved rollers.

In embodiments, the fuser member is comprised of a core, such as metals, with a coating, usually continuous, of a thermally conductive and resilient compressible material that preferably has a high thermomechanical strength. Various designs for fusing and fixing members are known in the art and are described.

Generally, the core can include any suitable supporting material, around or on which the subsequent layers are formed. Suitable core materials include, but are not limited to, metals such as aluminum, anodized aluminum, steel, nickel, copper, and the like. If desired, the core material can also be selected to be a polymeric material, such as polyamide, polyimide, polyether ether ketone (PEEK), Teflon/PFA, and the like, and mixtures thereof, which can be optionally filled with fiber such as glass, and the like. In embodiments, a polymeric or other core material may be desired that is formulated to include carbon nanotubes as described for the coating layers herein. Such core layers can further increase the overall thermal conductivity of the fuser member.

A coating, which is preferably of a thermally conductive and resilient compressible material, is then applied to the core member to form the layer 2. The coating can be any suitable material including, but not limited to, any suitable thermally conductive fluoropolymer, elastomer, or silicone material. Generally, the coating material must be a heat stable elastomer or resin material that can withstand elevated temperatures generally from about 90°C up to about 200°C or higher, depending upon the temperature desired for fusing or fixing the toner particles to the substrate. The coating material used in the fuser or fixing member must also generally not be degraded by any release agent that may be applied to the member, which is used to promote release of the molten or tackified toner from the member surface.

Suitable fluoropolymers include fluoroelastomers and fluororesins. Examples of suitable fluoroelastomers include, but are not limited to, i) copolymers of vinylidenefluoride and hexafluoropropylene; ii) terpolymers of vinylidenefluoride, hexafluoropropylene and tetrafluoroethylene; and iii) tetrapolymers of vinylidenefluoride, hexafluoropropylene, tetrafluoroethylene and a cure site monomer. For example, specifically, suitable fluoropolymers are those described. As described therein these fluoropolymers, particularly from the class of copolymers of vinylidenefluoride and hexafluoropropylene; terpolymers of vinylidenefluoride, hexafluoropropylene and tetrafluoroethylene; and tetrapolymers of vinylidenefluoride, hexafluoropropylene, tetrafluoroethylene and cure site monomer, are known commercially under various designations as VITON A®, VITON E®, VITON E 60C®, VITON E430®, VITON 910®, VITON GH® and VITON GF®. The VITON® designation is a Trademark of E.I. DuPont de Nemours, Inc. The cure site monomer can be, for example, 4-bromoperfluorobutene-1,1,1-dihydro-4-bromoperfluorobutene-1,3-bromoperfl uoropropene-1,1,1-dihydro-3-bromoperfluoropropene-1, or any other suitable, known cure site monomer commercially available from DuPont. Other commercially available fluoropolymers include FLUOREL 2170®, FLUOREL 2174®, FLUOREL 2176®, FLUOREL 2177® and FLUOREL LVS 76®, FLUOREL® being a Trademark of 3M Company. Additional commercially available materials include AFLAS® a poly(propylene-tetrafluoroethylene) and FLUOREL II® (LII900) a poly(propylene-tetrafluoroethylenevinylidenefluoride) both also available from 3M Company, as well as the Tecnoflons identified as FOR-60KIR®, FOR-LHF®, NM® FOR-THF®, FOR-TFS®, TH®, and TN505®, available from Montedison Specialty Chemical Company.

Other fluoropolymers useful in the present disclosure include polytetrafluoroethylene (PTFE), fluorinated ethylenepropylene copolymer (FEP), polyfluoroalkoxypolytetrafluoroethylene (PFA Teflon) and the like.

Preferred fluoropolymers useful for the surface of fuser members in the present disclosure include fluoroelastomers, such as fluoroelastomers of vinylidenefluoride based fluoroelastomers, which contain hexafluoropropylene and tetrafluoroethylene as comonomers. Three preferred known fluoroelastomers are (1) a class of copolymers of vinylidenefluoride and hexafluoropropylene known commercially as VITON A® (2) a class of terpolymers of vinylidenefluoride, hexafluoropropylene and tetrafluoroethylene known commercially as VITON B® and (3) a class of tetrapolymers of vinylidenefluoride, hexafluoropropylene, tetrafluoroethylene and cure site monomer known commercially as VITON GH® or VITON GF®. VITON A®, VITON B®, VITON GH®, VITON GF® and other VITON® designations are trademarks of E.I. DuPont de Nemours and Company. The fluoroelastomers VITON GH® and VITON GF® available from E.I. DuPont de Nemours Inc., have a preferred embodiment of relatively low amounts of vinylidenefluoride. The VITON GF® and Viton GH® have 35 weight percent of vinylidenefluoride, 34 weight percent of hexafluoropropylene and 29 weight percent of tetrafluoroethylene with 2 weight percent cure site monomer. In a further preferred embodiment, the fluoropolymer is PFA Teflon, FEP, PTFE, VITON GF® or VITON GH®. In a particularly preferred embodiment, the fluoropolymer is PFA Teflon, VITON GF® or VITON GH®.

Examples of suitable elastomer materials include, but are not limited to, organic rubbers such as ethylene/propylene diene, fortified organic rubbers that resist degradation at fusing temperatures, various copolymers, block copolymers, copolymer and elastomer blends, and the like. Any elastomer or resin preferably has thermal oxidative stability, i.e., resist thermal degradation at the operating temperature of the fuser member. Thus the organic rubbers that resist degradation at the operating temperature of the fuser member may preferably be used. These include chloroprene rubber, nitrile rubber, chlorobutyl rubber, ethylene propylene terpolymer rubber (EPDM), butadiene rubber, ethylene propylene rubber, butyl rubber, butadiene/acrylonitrile rubber, ethylene acrylic rubber, sytrene/butadiene rubber, and the like or the foregoing rubbers fortified with additives that thermally stabilize the rubber at least at the operating temperature of the fuser member.

Examples of suitable silicone materials include, but are not limited to, silicone rubber, fluorosilicones, siloxanes, and the like. Suitable silicone rubbers include room temperature vulcanization (RTV) silicone rubbers; high temperature vulcanization (HTV) silicone rubbers and low temperature vulcanization (LTV) silicone rubbers. These rubbers are known and readily available commercially such as SILASTIC® 735 black RTV and SILASTIC® 732 RTV, both from Dow Corning; and 106 RTV Silicone Rubber and 90 RTV Silicone Rubber, both from General Electric. Further examples of silicone materials include Dow Corning SILASTIC® 590 and 591, Sylgard 182, and Dow Corning 806A Resin. Other preferred silicone materials include fluorosilicones such as nonylfluorohexyl and fluorosiloxanes such as DC94003 and Q5-8601, both available from Dow Corning. Silicone conformable coatings such as X3-6765 available from Dow Corning. Other suitable silicone materials include the siloxanes (preferably polydimethylsiloxanes) such as, fluorosilicones, dimethylsilicones, liquid silicone rubbers such as vinyl crosslinked heat curable rubbers or silanol room temperature crosslinked materials, and the like. Suitable silicone rubbers are available also from, for example, Wacker Silicones, Dow Corning, GE Silicones, and Shin-Etsu.

The above coating materials, and others, can be used in the exterior surface layer of the members, or they can be used in intermediate layers, as desired. Adhesive materials can also be incorporated, as necessary or desired.

The coating can be applied to the core member by any suitable method known in the art. Such methods include, but are not limited to, spraying, dipping, flow coating, casting or molding. Typically the surface layer of the fuser member is from about 4 to about 9 mils and preferably 6 mils in thickness, as a balance between conformability and cost and to provide thickness manufacturing latitude.

In embodiments, in addition to the core member and the outer coating layer, the fuser or other members may also optionally include one or more thermally conductive intermediate layers between the substrate and the outer layer of the cured elastomer, if desired. Such intermediate layers can include, for example, a primer layer, an adhesive layer, a metal oxide filler layer, and the like.

Typical materials having the appropriate thermal and mechanical properties for such intermediate layers include thermally conductive (e.g., 0.59 Wm⁻¹K⁻¹) silicone elastomers such as high temperature vulcanizable ("HTV") materials, liquid silicone rubbers ("LSR") and room temperature vulcanizable ("RTV"), which may optionally include filler materials such as an alumina filler. The silicone elastomer may have a thickness of about 2 to 10 mm (radius). An HTV is either a plain polydimethyl siloxane ("PDMS"), with only methyl substituents on the chain, (OSi(CH₃)₂) or a similar material with some vinyl groups on the chain (OSi(CH=CH₂)(CH₃)). Either material is peroxide cured to create crosslinking. An LSR usually consists of two types of PDMS chains, one with some vinyl substituents and the other with some hydride substituents. They are kept separate until they are mixed just prior to molding. A catalyst in one of the components leads to the addition of the hydride group (OSiH(CH₃)) in one type of chain to the vinyl group in the other type of chain causing crosslinking.

To promote adhesion between the fuser member core and the fluoroelastomer surface layer, an adhesive, and in particular a silane adhesive, which includes a copolymer of vinylidenefluoride, hexafluoropropylene and at least 20 percent by weight of a coupling agent that comprises at least one organo functional silane and an activator, may be used. In addition, for the higher molecular weight hydrofluoroelastomers such as, for example, Viton GF, the adhesive may be formed from the FKM hydrofluoroelastomer in a solvent solution together with an amino silane represented by the formula as described in U.S. Patent No. 5,332,641, the entire disclosure of which is incorporated herein by reference.

To provide the desired thermal conductivity to the fuser member surface layer, an appropriate amount of filler can be incorporated into the elastomer material. Such filler material includes an effective amount of carbon nanotubes, and/or its variants, as described below. The filler material can also include a desired amount of conventional filler materials, such as metal oxides, if desired. Thus, in one embodiment, the outer elastomer layer of the fuser member is completely or substantially free of metal oxide filler materials, while in another embodiment the outer elastomer layer of the fuser member includes both carbon nanotubes and/or its variants as a filler material, in addition to metal oxide filler materials.

As the carbon nanotube material, any of the currently known or after-developed carbon nanotube materials and variants can be used. Thus, for example, the carbon nanotubes can be on the order of from about 1 to about 10 nanometers in diameter, and up to hundreds of micrometers or more in length. The carbon nanotubes can be in multi-walled or single-walled forms, or a mixture thereof. The carbon nanotubes can be either conducting or semi-conducting, either conducting nanotubes are preferred in embodiments. Variants of carbon nanotubes include, for example, nanofibers, and are encompassed by the term "nanotubes" unless otherwise stated.

In addition, the carbon nanotubes of the present disclosure can include only carbon atoms, or they can include other atoms such as boron and/or nitrogen, such as equal amounts of born and nitrogen. Examples of nanotube material variants thus include boron nitride, bismuth and metal chalcogenides. Combinations of these materials can also be used, and are encompassed by the term "carbon nanotubes" herein.

In embodiments, the carbon nanotubes can be incorporated as a filler into the elastomer layer of a fuser member in any desirable and effective amount. For example, a suitable loading amount can range from about 0.5 or from about 1 weight percent, to as high as about 50 or about 60 weight percent or more. However, loading amounts of from about 1 or from about 5 to about 20 or about 30 weight percent may be desired in some embodiments.

For example, measurements have been obtained at the Johnson Space Center on the strength and stiffness of a silicone elastomer filled with single-walled nanotubes. See reference by Files B S and Forest C R on Elastomer Filled with Single-Wall Carbon Nanotubes (http://www.nasatech.com/Briefs/Mar04/MSC23301.html) The composite is stronger and stiffer than the unfilled elastomer. The manual mixing of 1 weight% single-walled nanotubes in the silicon increased the tensile strength by 44% and the elasticity modulus by 75%. The incorporation of 1 weight% silicon carbide (SiC) decreased the modulus by 1 %. The tensile strength and elasticity modulus further increase with increased loading amounts of 5% and 10%.

When incorporated into the elastomer layer of a fuser member, the fuser member preferably has a thermal conductivity of at least about 0.3 Wm⁻¹K⁻¹, such as greater than about 0.4 Wm⁻¹K⁻¹ or greater than about 0.5 Wm⁻¹K⁻¹. In some embodiments, the thermal conductivity can be at least about 0.6 Wm⁻¹K⁻¹, such as greater than about 0.7 Wm⁻¹K⁻¹. The fuser member also preferably has a Shore A hardness of less than about 90, such as less than about 80 or less than about 70. In some embodiments, the Shore A hardness can be less than about 60, such as less than about 55.

Although the thermal conductivity values are lower than expected from the conductivity of the nanotubes alone, this difference is expected based on the structure of the composite materials. That is, the composite thermal conductivity for a 1 weight% loading of carbon nanotubes in a polymer binder is about 30 times less than what would be expected by a model that assumes no thermal resistance at the interface between nanotubes. The disparity in measurements and expectations might be due to a number of factors including the dispersability of the nanotubes in the matrix, a high interface thermal resistance, or an altering of the nanotube conductivity by interactions with the matrix. See Huxtable, S.T. et al., "Interfacial Heat Flow in Carbon Nanotube Composites," (http://users.mrl.uiuc.edu/cahill/nt-revised.pdf). Nevertheless, thermal conductivity values of carbon nanotube composite materials exceed the thermal conductivity values of composite materials filled with conventional metal oxide fillers.

A further benefit of the use of carbon nanotubes in fuser and fixer members, is that image disturbance can be prevented. In conventional fuser member designs, the metal oxide filler materials and composite materials tend to be insulating. In such members, charge accumulation can occur on the surface of the layers due to triboelectric charging between the insulative layers and the media containing the toner to be fused. The charge accumulation creates electric fields that can disturb the unfused toner layer as it enters the fusing zone.

However, in embodiments, the carbon nanotubes filler in the composite provides both thermal and electrical conductivity. As a result, any triboelectric charge on the surface of the fuser member is dissipated by the carbon nanotubes. Thus, image disturbance is prevented by making the fuser member electrically conductive, rather than insulative.

Once the desired layers are applied to the core member, the elastomer materials are cured. Any of the various curing methods known in the art can be used, such as convection oven drying, radiant heat drying, and the like.

An example is set forth hereinbelow and is illustrative of different compositions and conditions that can be utilized in practicing the disclosure. All proportions are by weight unless otherwise indicated. It will be apparent, however, that the disclosure can be practiced with many types of compositions and can have many different uses in accordance with the disclosure above and as pointed out hereinafter.

### Example 1:

A coated fuser roll is made by coating a layer of VITON rubber with AO700 curative (N-(2-aminoethyl)-3-aminopropyltrimethoxysilane, available from United Chemical Technologies, Inc.) on a metallic substrate. The fuser roll substrate is a cylindrical aluminum fuser roll core about 3 inches in diameter and 16 inches long, which is degreased, grit blasted, degreased and covered with a silane adhesive as described in U.S. Pat. No. 5,332,641, the entire disclosure of which is incorporated herein by reference.

The elastomer layer is prepared from a solvent solution/dispersion containing Viton™ polymer and A0700 curative, and loaded with 1 weight% carbon nanotubes. The coating material includes the A0700 curative at a level from 2-10 pph. The solution is sprayed upon the 3 inch cylindrical roll to a nominal thickness of about 10-12 mils. The coated fuser member is then cured in a convection oven.

The result is a fuser member that is electrically conductive, and shows excellent thermal conductivity without excessive hardness.

### Examples 2-5

Fuser rolls are prepared as in Example 1 above, except that the loading level of the carbon nanotubes is changed to 2%, 5%, 10%, and 20%, respectively. The results are fuser members that are electrically conductive, and show excellent thermal conductivity without excessive hardness. The thermal conductivity and hardness increase as the loading level increases, but the hardness remains in acceptable levels.

### Comparative Examples 1-5

Fuser rolls are prepared as in Examples 1-5 above, except that the carbon nanotubes are omitted, and are replaced by similar loading levels of alumina. The results are fuser members that are electrically insulative, and show good thermal conductivity and acceptable hardness. However, a comparison of the Examples and Comparative Examples shows that for the same loading level of filler, the fuser members filled with carbon nanotubes exhibit higher thermal conductivity with lower hardness values.

## Claims

1. A coated member (1), comprising:
a substrate (4); and
a coating layer (2) over said substrate (4), **characterized in that**
said coating layer comprises carbon nanotubes dispersed in a polymeric binder.

2. The coated member of claim 1, wherein said polymeric binder is an elastomeric material.

3. The coated member of claim 2, wherein the elastomer comprises a curable material selected from the group consisting of silicone elastomers, fluoroelastomers, ethylene propylene hexadiene, polytetrafluoroethylene, perfluoroalkoxy resins, and mixtures thereof.

4. The coated member of any of the preceding claims, wherein the substrate is formed of a material selected from the group consisting of aluminum, anodized aluminum, steel, nickel, copper, and mixtures thereof.

5. The coated member of any of the preceding claims, wherein said substrate is in a form of a hollow cylinder, a belt or a sheet.

6. The coated member of any of the preceding claims, wherein said carbon nanotubes are in a form of carbon nanofibers.

7. The coated member of any of the preceding claims, wherein said carbon nanotubes are selected from
i) the group consisting of materials containing only carbon atoms,
ii) materials containing carbon atoms and equal amounts of boron and nitrogen, or
iii) the group consisting of boron nitride, bismuth and metal chalcogenides.

8. The coated member of any of the preceding claims, wherein said carbon nanotubes are present in an amount of from about 0.5 to about 60 percent by weight.

9. The coated member of any of the preceding claims, wherein the coating layer of the coated member has a thermal conductivity of at least about 0.3 Wm⁻¹K⁻¹.

10. The coated member of any of the preceding claims, wherein the coating layer of the coated member has a Shore A hardness of less than about 90.

11. The coated member of any of the preceding claims, wherein the coating layer of the coated member is electrically conductive.

12. An electrostatographic printing device, comprising the coated member of any of the preceding claims.

13. The electrostatographic image development device of claim 12, wherein the coated member is selected from the group consisting of a fuser member, a fixing member, a pressure roller, and release agent donor member.

14. A process for making a coated member (1), comprising:
providing a substrate (4); and
coating the substrate with a coating layer (2) comprising carbon nanotubes dispersed in a polymeric binder.

15. The process of claim 14, wherein the coating layer (2) further comprises a metal oxide filler.
